# EUROPEAN PATENT APPLICATION

(11) **EP 4 538 911 A1**
(43) Date of publication of application: **16.04.2025**
(21) Application number: 23819934.3
(22) Date of filing: 09.06.2023
(51) Int. Cl.: G06F 21/32, G06F 21/45

(54) **AUTHENTICATION GUIDE DEVICE AND AUTHENTICATION GUIDE METHOD**

(30) Priority: 10.06.2022 JP 2022094623
(71) Applicant: Panasonic Intellectual Property Management Co., Ltd., Kadoma-shi, Osaka 571-0057 (JP)
(72) Inventor: FUKUDA, Teppei, Kadoma-shi, Osaka 571-0057 (JP); YAMAZAKI, Ryuji, Kadoma-shi, Osaka 571-0057 (JP)
(74) Representative: Eisenführ Speiser
(86) International application number: PCT/JP2023/021629
(87) International publication number: WO 2023/238954

(57) **Abstract**

This authentication guide device is provided with: one or more acquisition units that acquire ambient condition information when one or more sets of bio-information pertaining to a person and to be used for a plurality of kinds of biometric authentications are acquired; a guide determination unit that determines, on the basis of ambient environment information, a guide method for presenting an execution order for performing, out of the plurality of kinds of biometric authentications, biometric authentications preferentially on the person; and a guide display unit that displays the guide method on a display unit.

## Description

### TECHNICAL FIELD

The present disclosure relates to an authentication guide device and an authentication guide method.

### BACKGROUND ART

Patent Literature 1 discloses an information processing device that acquires a captured image obtained by capturing a face of a person to be imaged, refers to authentication data in which a captured image of a face of a person is associated with identification information for identifying the person, and identifies a person corresponding to the person to be imaged based on the acquired captured image. In particular, when a person corresponding to the person to be imaged cannot be identified, the information processing device receives an input of a speech voice of the person to be imaged, extracts identification information for identifying the person to be imaged from the speech voice, and registers authentication data in which the captured image of the person to be imaged is associated with the extracted identification information.

### CITATION LIST

### PATENT LITERATURE

Patent Literature 1: JP2021-131619A

### SUMMARY OF INVENTION

### TECHNICAL PROBLEM

There has been a personal authentication technology that performs identity verification (authentication), by using biometric information of a person, to determine whether a person to be authenticated matches a person registered in a database in advance. In recent years, in the personal authentication technology, multi-modal biometric authentication, which involves acquiring a plurality of types of biometric information (for example, face and voice) from a person to be authenticated and conducting authentication in multiple stages, is expected to become more widespread. Accordingly, it is expected to improve security against impersonation by others.

The authentication process performed by the information processing device according to Patent Literature 1 includes face authentication and voice authentication, but an execution order is determined, and specifically, the face authentication is performed first, followed by the voice authentication. That is, the order in which each biometric authentication (hereinafter referred to as "modal biometric authentication") is executed is determined, while the execution order may not necessarily be appropriate for the environment at the time of acquisition of the biometric authentication of a person to be authenticated (person to be imaged). For example, if the biometric information is acquired in a bright environment, the accuracy of the face authentication is likely to be improved, but if the biometric information is acquired in a dark environment, the accuracy of the face authentication may be degraded. In the authentication based on a fixed execution order without taking into account the environment at the time of acquiring the biometric information, there are problems with the authentication accuracy decreasing and time it takes to complete the authentication, and thus improvement in the efficiency of the authentication is expected.

The present disclosure has been devised in view of the above situation in the related art, and an object thereof is to provide an authentication guide device and an authentication guide method for adaptively presenting an effective authentication guide to a user according to a use situation of authentication, thereby supporting efficiency of the authentication.

### SOLUTION TO PROBLEM

The present disclosure provides an authentication guide device including: one or more acquisition units configured to acquire ambient condition information at a time of acquisition of one or more pieces of biometric information of a person to be used for a plurality of types of biometric authentication; a guide determination unit configured to determine, based on the ambient environment information, a guide method for presenting an execution order for preferentially executing the plurality of types of biometric authentication on a person; and a guide display unit configured to display the guide method on a display unit.

Further, the present disclosure provides an authentication guide method executed by an authentication guide device, the authentication guide method including: a step of acquiring ambient condition information at a time of acquisition of one or more pieces of biometric information of a person to be used for a plurality of types of biometric authentication; a step of determining, based on the ambient environment information, a guide method for presenting an execution order for preferentially executing the plurality of types of biometric authentication on a person; and a step of displaying the guide method on a display unit.

These comprehensive or specific aspects may be implemented by a system, a device, a method, an integrated circuit, a computer program, or a recording medium, and may be implemented by any combination of the system, the device, the method, the integrated circuit, the computer program, and the recording medium.

### ADVANTAGEOUS EFFECTS OF INVENTION

According to the present disclosure, it is possible to adaptively present an effective authentication guide to a user according to a use situation of authentication, thereby supporting efficiency of the authentication.

### BRIEF DESCRIPTION OF DRAWINGS

Fig. 1 is a block diagram showing a system configuration example of a biometric authentication system and a hardware configuration example of a multimodal authentication device.
Fig. 2 is a block diagram showing an internal configuration example of a processor of the multimodal authentication device.
Fig. 3 is a diagram showing a table defining examples of conditions for determining whether face authentication is to be used.
Fig. 4 is a diagram showing a table defining examples of conditions for determining whether voice authentication is to be used.
Fig. 5 is a diagram showing a table defining examples of conditions for determining whether fingerprint authentication is to be used.
Fig. 6 is a diagram showing a first display example of a guide method for modal biometric authentication that transitions in time series.
Fig. 7 is a diagram showing a second display example of the guide method for modal biometric authentication that transitions in time series.
Fig. 8 is a diagram showing an example of a display screen indicating an authentication success.
Fig. 9 is a diagram showing an example of a display screen indicating an authentication failure.
Fig. 10 is a flowchart showing an example of an overall operation procedure of the multimodal authentication device.
Fig. 11 is a flowchart showing an example of an operation procedure of a first subroutine for determining a guide method.
Fig. 12 is a flowchart showing an example of an operation procedure of a second subroutine for determining a guide method.
Fig. 13 is a flowchart showing an example of an operation procedure of a subroutine for switching a guide method.
Fig. 14 is a flowchart showing an example of an operation procedure of a subroutine for determining a priority of the modal biometric authentication.

### DESCRIPTION OF EMBODIMENTS

Hereinafter, embodiments in which an authentication guide device and an authentication guide method according to the present disclosure are specifically disclosed will be described in detail with reference to the drawings as appropriate. However, unnecessarily detailed description may be omitted. For example, detailed description of already well-known matters and redundant description of substantially the same configuration may be omitted. This is to avoid unnecessary redundancy of the following description and to facilitate understanding of those skilled in the art. It should be noted that the accompanying drawings and the following description are provided for those skilled in the art to sufficiently understand the present disclosure, and are not intended to limit the subject matter described in claims.

### <Definition of Terms>

First, terms used in the following embodiments (also referred to as "the present embodiment") are defined.
(1) "Modal biometric authentication": process of biometric authentication performed by an authentication guide device (for example, a multimodal authentication device 10) by acquiring or referring to biometric information of a person to be authenticated so that the person to be authenticated performs an action that satisfies a specific use or purpose; biometric authentication that comprehensively covers the following processes of face authentication, fingerprint authentication, and voice authentication.
(2) "Face authentication": one of the modal biometric authentication; an authentication that refers to a face image (captured image data of a face) of a person to be authenticated or a feature (an example of biometric information) for each feature point of the captured image data registered in advance in a user information database (to be described later), and performs identity verification based on whether a person to be authenticated who is subjected to face authentication matches the person to be authenticated corresponding to the registered face image or the feature of the face image.
(3) "Fingerprint authentication": one of the modal biometric authentication; an authentication that refers to a fingerprint image of a person to be authenticated or a feature (an example of biometric information) of the fingerprint image registered in advance in the user information database (to be described later), and performs identity verification based on whether a person to be authenticated who is subjected to fingerprint authentication matches the person to be authenticated corresponding to the registered fingerprint image (captured image data of fingerprint) or the feature for each feature point of the captured image data. In the following description of the present embodiment, the fingerprint authentication will be described as a non-contact type authentication executed without a finger of a person to be authenticated coming into contact with a sensor (for example, fingerprint camera 202), but it may be a contact type authentication performed with the contact on the sensor.
(4) "Voice authentication": one of the modal biometric authentication; an authentication that refers to a voice of a person to be authenticated or a feature (an example of biometric information) of the voice registered in advance in the user information database (to be described later), and performs identity verification based on whether a person to be authenticated who is subjected to voice authentication matches the person to be authenticated corresponding to the registered voice or the feature of the voice.
(5) "Ambient condition information": information indicating conditions including various environments around a person to be authenticated at the time of acquiring one or more pieces of biometric information of the person to be authenticated used for a plurality of types of modal biometric authentication; information comprehensively covering each of the following system condition information, environment condition information, usage condition information, and user information.
(6) "System condition information": fixed (static) information indicating a purpose of the biometric authentication system (for example, where the multimodal authentication device 10 is disposed and what actions a person to be authenticated is permitted to take when the biometric authentication is successful), a place where a sensor group (see below) is disposed, or specification of the sensor group (see below) at the time of designing the biometric authentication system or installing it in an actual installation place.
(7) "Environment condition information": information (for example, brightness, sound pressure of a noise signal) indicating environment surrounding a person to be authenticated at the time of acquiring one or more pieces of biometric information of the person to be authenticated used for a plurality of types of modal biometric authentication; information subject to change at any time depending on when it is acquired, unlike the system condition information.
(8) "Usage condition information": information indicating the purpose for which a person to be authenticated uses the biometric authentication system; information determined at the time when the person to be authenticated visits the installation place of the biometric authentication system. The usage condition information is information that requires a security level (to be described later) to be changed for each use, such as cash withdrawal, transfer, balance inquiry, and deposit.
(9) "User information": information indicating a preference or a characteristic (for example, a proficiency level or personal attribute) of a person to be authenticated; information that may be fixed when the person to be authenticated visits the installation place of the biometric authentication system, or may vary depending on mood or the like of the person to be authenticated. The personal attribute is, for example, information indicating that the person to be authenticated are twins.

### <System Configuration>

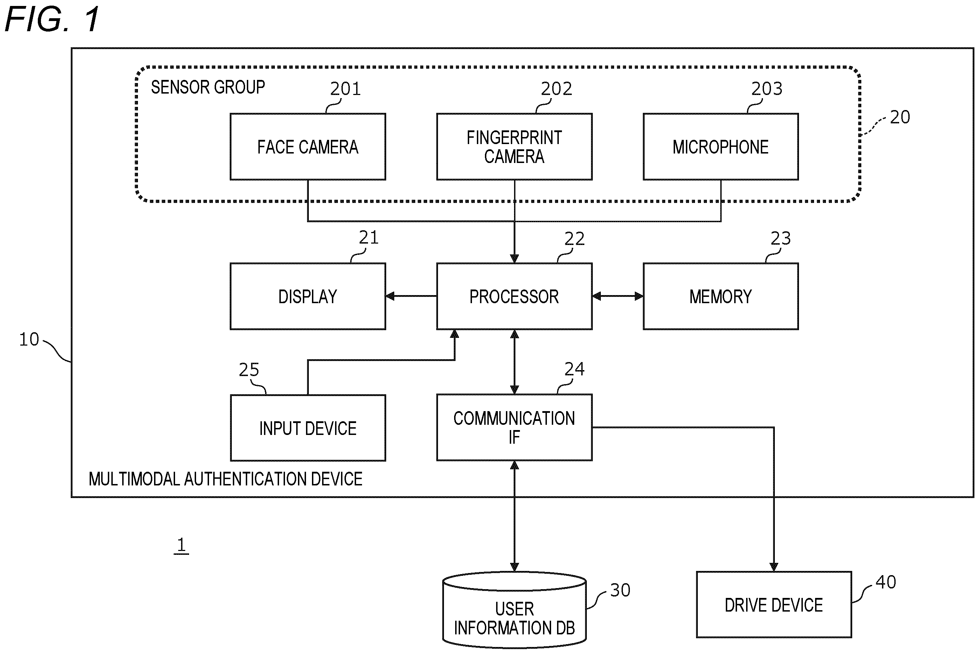

First, a system configuration of a biometric authentication system and a hardware configuration example of a multimodal authentication device according to the present embodiment will be described with reference to Fig. 1. Fig. 1 is a block diagram showing a system configuration example of a biometric authentication system 1 and a hardware configuration example of a multimodal authentication device 10.

The biometric authentication system 1 includes the multimodal authentication device 10, a user information database 30, and a drive device 40. In Fig. 1, the database is represented as DB. At least one of the user information database 30 and the drive device 40 may be included in the multimodal authentication device 10.

The multimodal authentication device 10 (an example of an authentication guide device) acquires the ambient condition information (refer to the above) at the time of acquisition of one or more pieces of biometric information of a person to be authenticated (user) used for a plurality of types of biometric authentication (modal biometric authentication), and determines a guide method for defining an execution order for preferentially executing the plurality of types of biometric authentication on the person to be authenticated (user) based on the acquired ambient condition information. The multimodal authentication device 10 displays the determined guide method on a display unit (to be described later), and in parallel with the display of the guide method, sequentially executes the modal biometric authentication for the person to be authenticated (user) according to the determined guide method.

The multimodal authentication device 10 includes a sensor group 20, a display 21, a processor 22, a memory 23, a communication IF 24, and an input device 25. In Fig. 1, an interface is denoted as IF. The multimodal authentication device 10 has a housing equipped with the sensor group 20 including sensors for acquiring one or more pieces of biometric information of a person to be authenticated (user) for use in a plurality of types of modal biometric authentication, and may be, for example, a tablet, a personal computer (PC), or a mobile terminal. Further, the multimodal authentication device 10 may be configured with one housing including a plurality of sensors, or may be configured with a plurality of housings each including at least one sensor. The multimodal authentication device 10 is installed, for example, at an entrance of a commercial facility, an amusement park, a tourist spot, or a building, and performs identity verification for a person to be authenticated (user) who is a visitor. In addition, the multimodal authentication device 10 is installed in an automatic teller machine (ATM) of a financial institution such as a bank or a postal office, and performs identity verification of a person to be authenticated (user). The installation place of the multimodal authentication device 10 is merely an example, and is not limited thereto.

The sensor group 20 includes a face camera 201, a fingerprint camera 202, and a microphone 203. The face camera 201 and the fingerprint camera 202 may be the same camera.

The face camera 201 is a camera device (an example of a sensor) that captures an image of the face of a person to be authenticated that is the person to be authenticated. Hereinafter, image data obtained by capturing an image using the face camera 201 or the fingerprint camera 202 is referred to as captured image data. The face camera 201 acquires captured image data of the face of a person to be authenticated, which is biometric information necessary for face authentication, by capturing an image according to a frame rate defined in advance, or calculates a feature (for example, vector data) for each feature point in the captured image data by using the captured image data. The face camera 201 outputs the captured image data or feature data based on the captured image data to the processor 22. The calculation of the feature data based on the captured image data of the face of the person to be authenticated may be executed by the processor 22.

The fingerprint camera 202 is a camera device (an example of a sensor) that captures a fingerprint of a person to be authenticated. The fingerprint camera 202 acquires captured image data of a finger of a person to be authenticated, which is biometric information necessary for fingerprint authentication, by capturing an image according to a frame rate defined in advance, or acquires feature data (for example, vector data) for each feature point in the captured image data by calculation using the captured image data. The fingerprint camera 202 outputs the captured image data or the feature data based on the captured image data to the processor 22. The calculation of the feature data based on the captured image data of the finger of the person to be authenticated may be executed by the processor 22.

Each of the face camera 201 and the fingerprint camera 202 may acquire the ambient condition information (refer to the above) of the multimodal authentication device 10 by calculation based on a luminance component of a subject captured in the captured image data. The ambient condition information that can be acquired by the face camera 201 or the fingerprint camera 202 is, for example, brightness of the surroundings of a place where the multimodal authentication device 10 is disposed. The acquisition of the ambient condition information (for example, brightness) may be performed by not only the face camera 201 and the fingerprint camera 202, but also a sensor including a camera provided in or out of the multimodal authentication device 10.

The microphone 203 is a microphone device (an example of a sensor) that picks up the speech of a person to be authenticated. The microphone 203 acquires pickup data of voice based on the speech of a person to be authenticated, which is biometric information necessary for the voice authentication, or acquires feature data (for example, vector data) in the pickup data by calculation using the pickup data. The microphone 203 outputs the pickup data or feature data based on the pickup data to the processor 22. The calculation of the feature data based on the pickup data may be executed by the processor 22.

The microphone 203 may acquire the ambient condition information of the multimodal authentication device 10 by calculation based on a signal component included in the pickup data. The ambient environment information that can be acquired by the microphone 203 is, for example, sound pressure of a noise signal (noise) around a person to be authenticated other than the speech voice of the person to be authenticated. The acquisition of the ambient environment information (for example, a noise signal such as noise) may be performed by not only the microphone 203, but also a sensor including a microphone provided in or out of the multimodal authentication device 10.

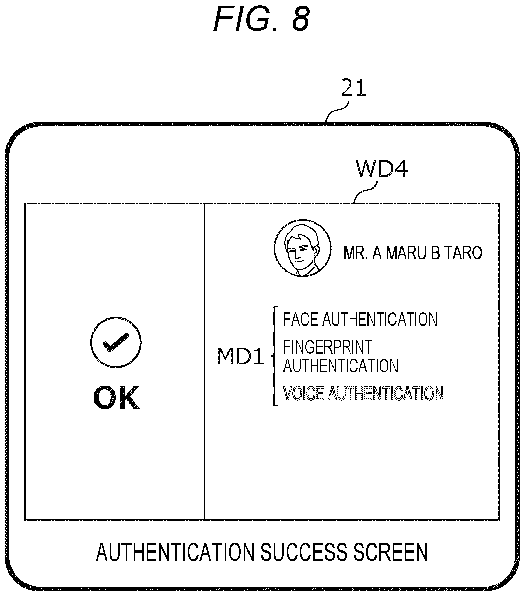

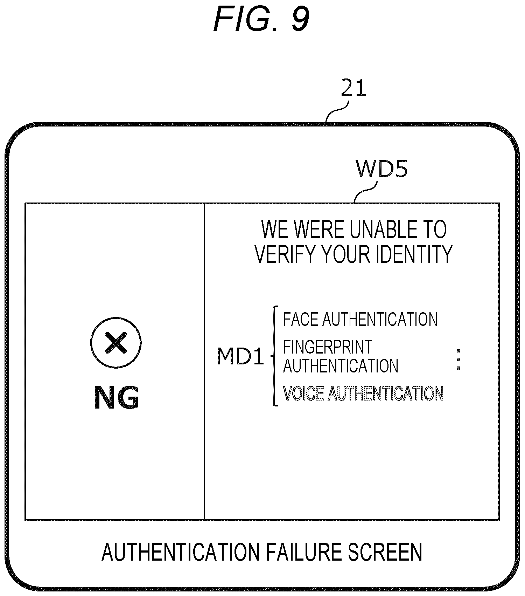

The display 21 (an example of a display unit) is a display device implemented using, for example, a liquid crystal display (LCD) or an organic electroluminescence (EL). The display 21 displays an authentication result screen (for example, an authentication success screen WD4 shown in Fig. 8 or an authentication failure screen WD5 shown in Fig. 9) acquired from the processor 22.

The processor 22 is implemented using a semi-conductor chip on which at least one of electronic devices such as a central processing unit (CPU), a digital signal processor (DSP), a graphical processing unit (GPU), and a field programmable gate array (FPGA) is mounted. The processor 22 functions as a controller that controls the overall operation of the multimodal authentication device 10, and executes a control process for controlling operation of each unit of the multimodal authentication device 10, a data input and output process between the units of the multimodal authentication device 10, a data calculation process, and a data storage process.

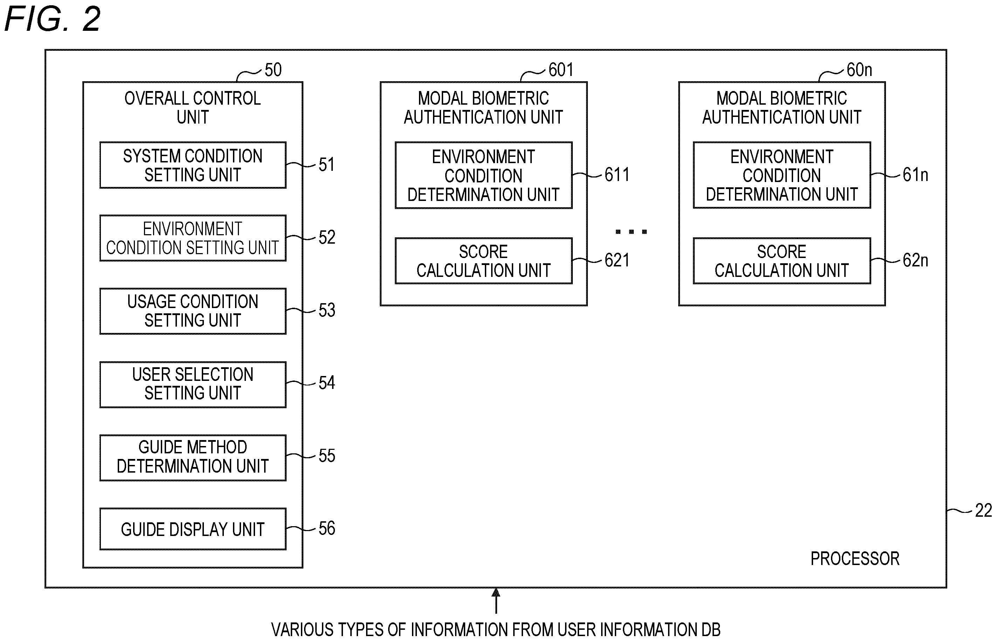

The processor 22 implements the functions of an overall control unit 50 (see Fig. 2) and each of modal biometric authentication units 601, ..., 60n (see Fig. 2) by using programs and control data stored in a read only memory (ROM) of the memory 23. The processor 22 uses a random access memory (RAM) of the memory 23 during operation to temporarily store, in the RAM of the memory 23, data or information generated or acquired by each unit functionally executed by the processor 22.

The memory 23 includes at least the ROM that stores, for example, a program that defines various kinds of processes executed by the processor 22 and control data used during execution of the program, and the RAM serving as a work memory used when various kinds of processes executed by the processor 22 are executed. In the ROM, the program that defines various kinds of processes executed by the processor 22 and the control data used during execution of the programs are written. The RAM temporarily stores data or information generated or acquired by the processor 22 (for example, biometric information acquired by each sensor device of the sensor group 20 or a score and reliability of the biometric authentication performed by the modal biometric authentication unit). The ROM may be replaced by, for example, a flash memory, a hard disk drive (HDD), a solid-state drive (SSD), or a server device outside the authentication device, and the data may be processed to be read at the time of activation of the device. The data or information stored in the RAM is not limited thereto.

The communication IF 24 is a network interface circuit that performs wireless or wired communication between the multimodal authentication device 10 and each of the user information database 30 and the drive device 40. Examples of a communication method used for communication of the communication IF 24 include mobile communication such as a wide area network (WAN), a local area network (LAN), Wi-Fi (registered trademark), a long term evolution (LTE), LTE-Advanced, and 5G, power line communication, near field communication (for example, Blootooth (registered trademark) communication), or communication for mobile phones.

The input device 25 is a device that receives an input from a person to be authenticated. The input device 25 is, for example, a touch panel display or a sensor capable of authenticating an entry pass or an employee ID card. The input device 25 receives input of a name, a gender, an age, an ID, a password, and usage condition information (refer to the above) of the biometric authentication performed by the multimodal authentication device 10 or user information (refer to the above) from a person to be authenticated. The input device 25 transmits various types of input information to the processor 22. The input device 25 may be omitted from the configuration of the multimodal authentication device 10.

The user information database 30 is implemented by a storage medium (for example, a flash memory, a hard disk drive (HDD), or a solid state drive (SSD)). The user information database 30 stores previously registered data of biometric information and various types of information (name, age, gender, face photo, ID, password, preference, proficiency level, and the like) of a person to be authenticated used in the modal biometric authentication. The biometric information is, for example, captured image data of a face, feature data of a feature point on the captured image data of the face, captured image data of a finger (fingerprint), feature data of a feature point on the captured image data of the fingerprint, data of speech voice, feature data of the speech voice, and the like. The biometric information is not limited thereto. The user information database 30 may be stored in, for example, a cloud server (not shown), and may be communicably connected to the multimodal authentication device 10 via a network.

The drive device 40 is a device that executes various processes based on a result of the biometric authentication by the multimodal authentication device 10. Here, the various processes include, for example, a process of controlling the opening and closing of an authentication gate (not shown) installed in the vicinity of the multimodal authentication device 10, a process of sounding a buzzer sound from a speaker mounted on the multimodal authentication device 10, and a process of turning on or blinking a light (for example, a light emission diode (LED) light) mounted on the multimodal authentication device 10. The operation executed by the drive device 40 is not limited thereto.

### <Internal Configuration of Processor of Multimodal Authentication Device>

Next, an internal configuration example of the processor 22 of the multimodal authentication device 10 will be described with reference to Fig. 2. Fig. 2 is a block diagram illustrating an internal configuration example of the processor 22 of the multimodal authentication device 10.

The processor 22 implements the functions of the overall control unit 50 and the modal biometric authentication units 601 to 60n (n: a predetermined integer of 2 or more). The overall control unit 50 and the modal biometric authentication units 601 to 60n may be implemented by one processor as shown in Fig. 2, or may be implemented by functions of different processors. The number of modal biometric authentication units is not limited to two, and may be the same as the number of types of biometric authentication executable by the multimodal authentication device 10. For example, when the multimodal authentication device 10 can execute three types of modal biometric authentication, namely, face authentication, fingerprint authentication and voice authentication, a total of three modal biometric authentication units are implemented by the processor 22.

The overall control unit 50 executes various processes related to biometric authentication for identity verification of a person to be authenticated, and processes of determining and displaying a guide method for presenting an execution order for preferentially executing a plurality of types of modal biometric authentication on a person to be authenticated. In addition, the overall control unit 50 acquires a processing result (for example, the score and the reliability of the modal biometric authentication) of each modal biometric authentication from each of the modal biometric authentication units 601 to 60n, determines whether the person to be authenticated matches a person registered in the user information database 30 based on the acquired processing result (that is, whether the identity verification is performed normally), displays a determination result on the display 21 (see Fig. 8 or Fig. 9), and/or performs an operation such as opening or closing a door via the drive device 40. The overall control unit 50 functionally includes a system condition setting unit 51, an environment condition setting unit 52, a usage condition setting unit 53, a user selection setting unit 54, a guide method determination unit 55, and a guide display unit 56.

The system condition setting unit 51 (an example of an acquisition unit) has a built-in memory such as a flash memory, and sets the system condition information of the biometric authentication system 1 in the built-in memory at the time of initial installation of the biometric authentication system 1. After the initial installation, the system condition setting unit 51 holds the system condition information of the biometric authentication system 1 in the built-in memory. The system condition information is set at the time of initial installation of the biometric authentication system 1, and once operation is started, no additions, changes, or deletions are made to the system condition information during the operation. The system condition settings may be stored in, for example, a flash memory, an HDD, an SSD, or a server device external to the authentication device, and may be processed so as to be read when the device is activated.

The environment condition setting unit 52 (an example of the acquisition unit) has a built-in memory such as a flash memory, and acquires the environment condition information, which is information (for example, brightness, sound pressure of a noise signal) indicating the environment surrounding a person to be authenticated at the time of acquiring the biometric information of the person to be authenticated, from the output from the sensor group 20 as it is, or calculates the environment condition information based on the output and sets the environment condition information in the built-in memory. The environment condition setting unit 52 acquires or calculates the environment condition information every time biometric information is acquired for biometric authentication. The environment condition setting unit 52 may acquire only the environment condition information separately from the acquisition of the biometric information.

The usage condition setting unit 53 (an example of the acquisition unit) has a built-in memory such as a flash memory, acquires the usage condition information input by a person to be authenticated through operation on the input device 25, and sets the usage condition information in the built-in memory. The usage condition setting unit 53 acquires changed usage condition information from the input device 25 every time the use of the biometric authentication system 1 by the person to be authenticated is changed, and sets the changed usage condition information in the built-in memory.

The user selection setting unit 54 (an example of the acquisition unit) has a built-in memory such as a flash memory, acquires the user information input by a person to be authenticated through operation on the input device 25, and sets the user information in the built-in memory. In addition, when personal identification information such as the ID of a person to be authenticated is acquired by an operation on the input device 25, the user selection setting unit 54 may acquire the user information corresponding to the personal identification information from the user information database 30 and set the user information in the built-in memory. The user selection setting unit 54 acquires the user information every time the preference or characteristic of a person to be authenticated is changed, and sets the user information in the built-in memory.

The guide method determination unit 55 determines a guide method for presenting an execution order for preferentially executing a plurality of types of biometric authentication on a person to be authenticated based on contents (an example of the ambient environment information) set in each of the system condition setting unit 51, the environment condition setting unit 52, the usage condition setting unit 53, and the user selection setting unit 54. The procedure for determining the guide method by the guide method determination unit 55 will be described later in detail.

The guide display unit 56 outputs and displays on the display 21 the guide method determined by the guide method determination unit 55. Further, the guide display unit 56 outputs and displays on the display 21 a screen (see Fig. 8 or Fig. 9) indicating a result of the biometric authentication determined by the overall control unit 50 based on a processing result of each of the modal biometric authentication units 601 to 60n.

In order to support a plurality of types of biometric authentication, the multimodal authentication device 10 is provided with the same number of modal biometric authentication units as the number of executable biometric authentication. Specifically, the multimodal authentication device 10 is capable of executing each of n (n: a predetermined integer of 2 or more) types of modal biometric authentication, and therefore includes n modal biometric authentication units (specifically, the modal biometric authentication units 601 to 60n) corresponding to each modal biometric authentication.

The modal biometric authentication unit 601 includes an environment condition determination unit 611 and a score calculation unit 621. Similarly, the modal biometric authentication unit 60n includes an environment condition determination unit 61n and a score calculation unit 62n. Therefore, the modal biometric authentication unit will be described by taking the modal biometric authentication unit 601 as an example, and this description can be similarly applied to the configuration of other modal biometric authentication units (for example, the modal biometric authentication unit 60n).

The modal biometric authentication unit 601 executes a modal biometric authentication process using one or more pieces of the biometric information acquired from the sensor group 20, and transmits a processing result of the modal biometric authentication to the overall control unit 50.

The environment condition determination unit 611 acquires the environment condition information (for example, brightness, sound pressure of a noise signal) from the output of the sensor group 20 or the environment condition setting unit 52. The environment condition determination unit 611 determines the reliability at the time of execution of the modal biometric authentication process performed by the modal biometric authentication unit 601 based on the acquired environment condition information.

The score calculation unit 621 acquires the biometric information (for example, captured image data of a face or feature data for each feature point in the captured image data) necessary for the modal biometric authentication performed by the modal biometric authentication unit 601 from the output of the sensor group 20, and refers to and reads out biometric information of the same type registered in the user information database 30 (for example, captured image data of a face or feature data for each feature point in the captured image data). The score calculation unit 621 compares the acquired biometric information with the biometric information of the same type registered in the user information database 30 to calculate a result of the modal biometric authentication process (that is, a score indicating the likelihood that the person to be authenticated matches the person registered in the user information database 30).

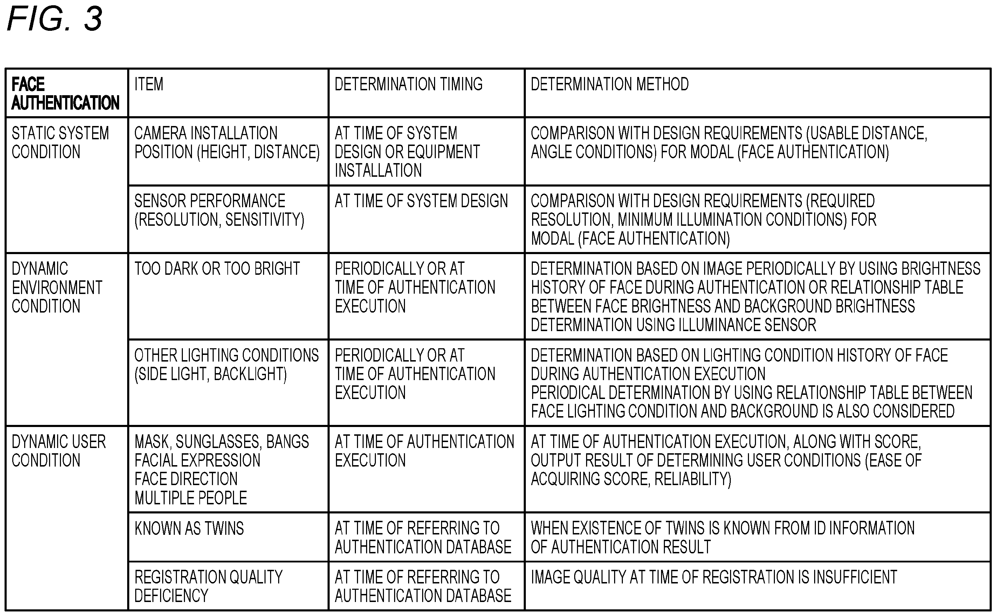

Fig. 3 is a diagram showing a table defining examples of conditions for determining whether the face authentication is to be used. In Fig. 3, "static system condition" corresponds to the system condition information, "dynamic environment condition" corresponds to the environment condition information, and "dynamic user condition" corresponds to the user information. The guide method determination unit 55 (see Fig. 2) determines whether it is preferable to preferentially execute the face authentication on a person to be authenticated based on at least one of the system condition information, the environment condition information, and the user information and contents shown in the table shown in Fig. 3.

For example, the "static system condition" defines the following items: "camera installation position" and "sensor performance". The "camera installation position" indicates the height and distance of the face camera 201 (that is, a distance to a person to be authenticated). Since the face camera 201 is attached at the time of initial installation of the biometric authentication system 1, whether the face authentication is preferentially executed based on the "camera installation position" of the system condition information is determined at the time of system design or equipment installation (at the time of initial installation). That is, by "camera installation position", the face authentication is determined to be preferentially executed when the captured image data of the face camera 201 or the feature data of the captured image data satisfies a design requirement (for example, a usable distance and angle conditions) for the face authentication.

The "sensor performance" indicates the resolution and sensitivity of the face camera 201. Since the face camera 201 is attached at the time of initial installation of the biometric authentication system 1, whether the face authentication is preferentially executed based on the "sensor performance" of the system condition information is determined at the time of system design. That is, by "sensor performance", the face authentication is determined to be preferentially executed when the captured image data of the face camera 201 or the feature data of the captured image data satisfies a design requirement (for example, required resolution and minimum illumination conditions) for the face authentication.

Next, the "dynamic environment condition" defines the following items: "too dark or too bright" and "other lighting conditions". The "too dark or too bright" indicates a state where the brightness based on the luminance component of the captured image data of the face camera 201 is less than a predetermined darkness threshold or the brightness is greater than a predetermined brightness threshold. Whether the face authentication is preferentially executed based on "too dark or too bright" of the environment condition information ("dynamic environment condition") is determined periodically or at the time of execution of the modal biometric authentication. That is, by "too dark or too bright", the necessity of the face authentication is periodically determined by referring to a brightness history based on the captured image data of a face during past face authentication or a table (not shown) defining the brightness of a face portion and of a background portion in the captured image data of the face camera 201, or when the face camera 201 includes an illuminance sensor (not shown), is determined using an output value of the illuminance sensor.

Further, the "other lighting conditions" includes side light and backlight around a position imaged by the face camera 201. Whether the face authentication is preferentially executed based on "other lighting conditions" of the environment condition information ("dynamic environment condition") is determined periodically or at the time of execution of the modal biometric authentication. That is, by "other lighting conditions", the necessity of the face authentication is periodically determined by referring to a lighting condition history of a face during past face authentication or a table (not shown) defining the relationship between a lighting condition of the face and the background.

Next, the "dynamic user condition" defines the following items: "mask, sunglasses, bangs, facial expression, face direction, and multiple people", "known as twins", and "registration quality deficiency". When a person to be authenticated is about to subject to the face authentication, the accuracy of the face authentication is degraded if any one of the following conditions are met: the person is wearing a "mask", "sunglasses", or has "bangs" that obscure a part of the face, "facial expression" is significantly different from normal, such as smiling, "face direction" is not forward, and "multiple people" are captured in the captured image data of the face camera 201. Therefore, whether the face authentication is preferentially executed based on the "mask, sunglasses, bangs, facial expression, face direction, and multiple people" of the user information ("dynamic user condition") is preferably determined at the time of executing the modal biometric authentication based on the captured image data of the face camera 201. When the face authentication is executed after any one or more of the following conditions are met, the person is wearing a "mask", "sunglasses", or has "bangs" that obscure a part of the face, "facial expression" is significantly different from normal, such as smiling, "face direction" is not forward, and "multiple people" are captured in the captured image data of the face camera 201, it is preferable to use not only the score but also a determination result of the reliability of the face authentication to determine whether the face authentication is necessary from the next time onwards.

In addition, when "known as twins" is satisfied by referring to the user information database 30, for example, in the case of male twins, it is difficult to tell whether the person to be authenticated is the older or younger brother, and the accuracy of the face authentication is degraded. The same applies to the case of female twins. Therefore, whether the face authentication is preferentially executed based on the "known as twins" of the user information ("dynamic user condition") is preferably determined at the time of executing the modal biometric authentication (in particular, when referring to the user information database 30) based on the captured image data of the face camera 201. In a case where the face authentication is executed after "known as twins" is satisfied, it is preferable that information indicating that the existence of twins is known is also included as the output.

In addition, when "registration quality deficiency" is satisfied by referring to the user information database 30, the quality (reliability) of the registered information or data is poor, and thus the accuracy of the face authentication is degraded. Therefore, whether the face authentication is preferentially executed based on the "registration quality deficiency" of the user information ("dynamic user condition") is preferably determined at the time of executing the modal biometric authentication (in particular, when referring to the user information database 30) based on the captured image data of the face camera 201. When the face authentication is executed after "registration quality deficiency" is satisfied, it is preferable that information indicating that the quality of the image data of the face at the time of registration or the feature data of the image is insufficient is also included as the output.

In a case where the face camera 201 is disposed at a position of a height where a person to be authenticated naturally looks at the face camera 201 (that is, without looking up or down beyond a certain angle) in the location where the housing of the multimodal authentication device 10 is disposed, or in a case where a person to be authenticated is located at a position slightly away from the multimodal authentication device 10, the multimodal authentication device 10 may preferentially guide the face authentication based on the system condition information having height information of the face camera 201. In this case, for example, use cases include, but are not limited to, entrance and exit management, reception at hospitals or the like, roll calls, and identity verification at events.

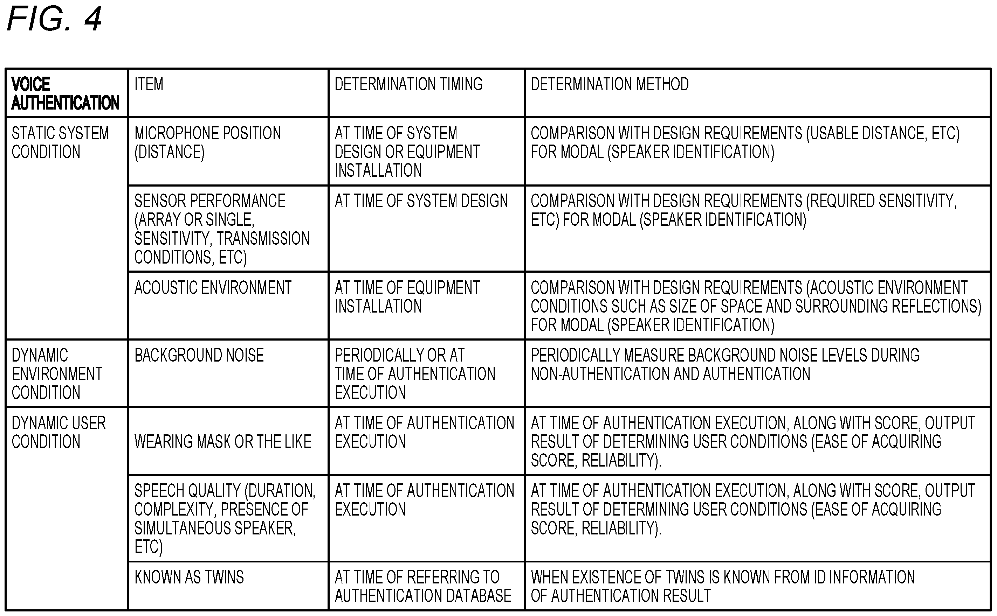

Fig. 4 is a diagram showing a table defining examples of conditions for determining whether the voice authentication is to be used. In Fig. 4, "static system condition" corresponds to the system condition information, "dynamic environment condition" corresponds to the environment condition information, and "dynamic user condition" corresponds to the user information. The guide method determination unit 55 (see Fig. 2) determines whether it is preferable to preferentially execute the voice authentication on a person to be authenticated based on at least one of the system condition information, the environment condition information, and the user information and contents shown in the table shown in Fig. 4.

For example, the "static system condition" defines the following items: "microphone position", "sensor performance", and "acoustic environment". The "microphone position" indicates a distance of the microphone 203 (that is, a distance to a person to be authenticated). Since the microphone 203 is attached at the time of initial installation of the biometric authentication system 1, whether the voice authentication is preferentially executed based on the "microphone position" of the system condition information is determined at the time of system design or equipment installation (at the time of initial installation). That is, by "microphone position", the voice authentication is determined to be preferentially executed when the pickup data of the microphone 203 or the feature data of the pickup data satisfies a design requirement (for example, a usable distance and the like) for the voice authentication.

The "sensor performance" indicates information indicating whether the microphone 203 is a microphone array or a single microphone, sensitivity, transmission conditions, and the like. Since the microphone 203 is attached at the time of initial installation of the biometric authentication system 1, whether the voice authentication is preferentially executed based on the "sensor performance" of the system condition information is determined at the time of system design. That is, by "sensor performance", the voice authentication is determined to be preferentially executed when the pickup data of the microphone 203 or the feature data of the pickup data satisfies a design requirement (for example, required sensitivity and the like) for the voice authentication.

In addition, the "acoustic environment" indicates a size of a space including a position where a person to be authenticated exists, a condition of reverberation around the position, or the like. Since the microphone 203 is attached at the time of initial installation of the biometric authentication system 1, whether the voice authentication is preferentially executed based on the "acoustic environment" of the system condition information is determined at the time of installation of the microphone 203. That is, by "acoustic environment", the voice authentication is determined to be preferentially executed when the pickup data of the microphone 203 or the feature data of the pickup data satisfies a design requirement (for example, a size of a space including a position where a person to be authenticated exists, a condition of reverberation around the position) for the voice authentication.

Next, the "dynamic environment condition" defines an item "background noise". The "background noise" indicates a sound pressure of a noise component (for example, a noise signal) around the microphone 203 when the microphone 203 picks up a voice uttered by a person to be authenticated. Whether the voice authentication is preferentially executed based on "background noise" of the environment condition information ("dynamic environment condition") is determined periodically or at the time of execution of the modal biometric authentication. That is, by "background noise", the necessity of voice authentication is periodically determined by referring to a table (not shown) that defines components of background noise (for example, levels of sound pressure and the like) when the modal biometric authentication (voice authentication) is not performed and when the modal biometric authentication is performed.

Next, the "dynamic user condition" defines the following items: "wearing a mask or the like", "speech quality", and "known as twins". When a person to be authenticated is about to subject to the voice authentication, if the person to be authenticated wears a mask or the like, the voice uttered by the person to be authenticated is easily attenuated by the mask or the like, and the level of the sound pressure and the like picked up by the microphone 203 decreases, thereby degrading the accuracy of voice authentication. Therefore, whether the voice authentication is preferentially executed based on the "mask or the like" of the user information ("dynamic user condition") is preferably determined at the time of executing the modal biometric authentication based on the pickup data of the microphone 203. In a case where the voice authentication is executed after "mask or the like" is worn in the pickup data of the microphone 203, it is preferable to use not only the score but also the user condition (for example, a determination result of the reliability of the voice authentication and the ease of acquiring score) to determine whether the voice authentication is necessary from the next time onwards.

The "speech quality" indicates factors that affect the quality of speech, such as duration, complexity, and the presence of a simultaneous speaker. When the "speech quality" including the factors exemplified above is not good, the pickup data picked up by the microphone 203 is similarly adversely affected in the same way, and thus the accuracy of the voice authentication is degraded. Therefore, whether the voice authentication is preferentially executed based on the "speech quality" of the user information ("dynamic user condition") is preferably determined at the time of executing the modal biometric authentication based on the pickup data of the microphone 203. In a case where the voice authentication is executed in the pickup data of the microphone 203, it is preferable to use not only the score but also the user condition (for example, a determination result of the reliability of the voice authentication and the ease of acquiring score) to determine whether the voice authentication is necessary from the next time onwards.

In addition, when "known as twins" is satisfied by referring to the user information database 30, for example, in the case of male twins, it is difficult to tell whether the person to be authenticated is the older or younger brother, and the accuracy of the voice authentication is degraded. The same applies to the case of female twins. Therefore, whether the voice authentication is preferentially executed based on the "known as twins" of the user information ("dynamic user condition") is preferably determined at the time of executing the modal biometric authentication (in particular, when referring to the user information database 30) based on the pickup data of the microphone 203. In a case where the voice authentication is executed after "known as twins" is satisfied, it is preferable that information indicating that the existence of twins is known is also included as the output.

In a state where a person to be authenticated does not look in the direction of any one of the face camera 201, the fingerprint camera 202, and the microphone 203, or in a case where the biometric information is acquired so as to cover a wide area centered on a location where the multimodal authentication device 10 is installed, the multimodal authentication device 10 may preferentially guide the voice authentication based on the characteristics of the microphone 203, which only needs to pick up the voice of the person to be authenticated. In this case, for example, use cases include, but are not limited to, identifying workers in a factory or the like, identifying speakers in a meeting or the like, and managing usage history such as entry to a sports gym.

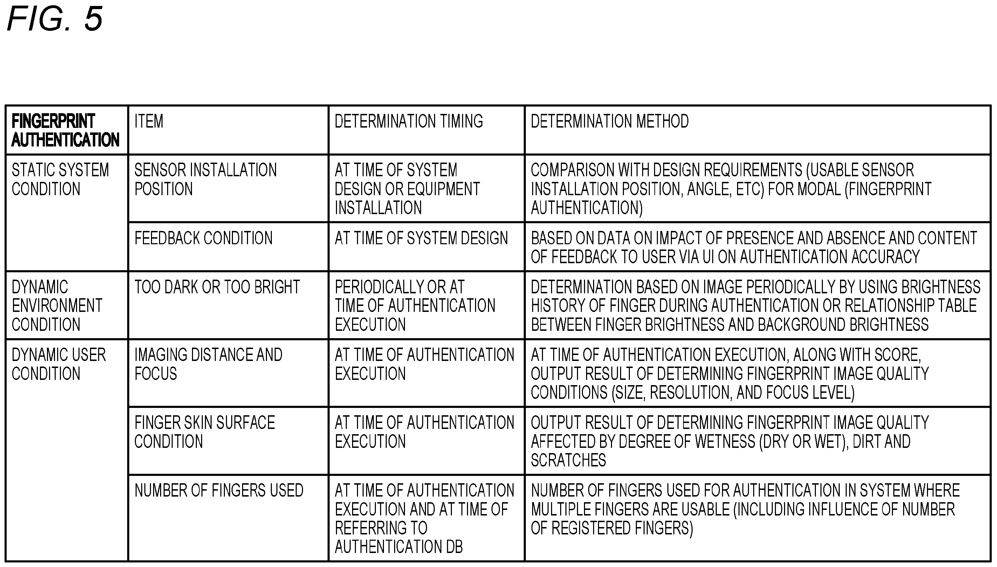

Fig. 5 is a diagram showing a table defining examples of conditions for determining whether the fingerprint authentication is to be used. In Fig. 5, "static system condition" corresponds to the system condition information, "dynamic environment condition" corresponds to the environment condition information, and "dynamic user condition" corresponds to the user information. The guide method determination unit 55 (see Fig. 2) determines whether it is preferable to preferentially execute the fingerprint authentication on a person to be authenticated based on at least one of the system condition information, the environment condition information, and the user information and contents shown in the table shown in Fig. 4.

For example, the "static system condition" defines the following items: "sensor installation position" and "feedback condition". The "sensor installation position" indicates, for example, the height and distance (that is, distance) of the fingerprint camera 202. Since the fingerprint camera 202 is attached at the time of initial installation of the biometric authentication system 1, whether the fingerprint authentication is preferentially executed based on the "sensor installation position" of the system condition information is determined at the time of system design or equipment installation (at the time of initial installation). That is, by "sensor installation position", the fingerprint authentication is determined to be preferentially executed when the captured image data of the fingerprint camera 202 or the feature data of the captured image data satisfies a design requirement (for example, a usable distance and angle conditions) for the fingerprint authentication.

The "feedback condition" indicates whether a processing result of the fingerprint authentication is to be fed back (for example, notification by screen or voice) to a person to be authenticated, and a content of the feedback. It may be difficult for the person to be authenticated to recognize whether the fingerprint camera 202 correctly captures an image of the finger of the person to be authenticated. If feedback is given in this case, the accuracy of the fingerprint authentication is expected to be improved. Whether the fingerprint authentication is preferentially executed based on "feedback condition" of the system condition information is determined at the time of system design. That is, by "feedback condition", the fingerprint authentication is determined to be preferentially executed when conditions for the presence or absence of feedback and the notification (refer to the above) of the content of the feedback to the person to be authenticated are satisfied.

Next, the "dynamic environment condition" defines an item "too dark or too bright". The "too dark or too bright" indicates a state where the brightness based on the luminance component of the captured image data of the fingerprint camera 202 is less than a predetermined darkness threshold or the brightness is greater than a predetermined brightness threshold. Whether the fingerprint authentication is preferentially executed based on "too dark or too bright" of the environment condition information ("dynamic environment condition") is determined periodically or at the time of execution of the modal biometric authentication. That is, by "too dark or too bright", the necessity of the fingerprint authentication is periodically determined by referring to a brightness history based on the captured image data of a finger during past fingerprint authentication or a table (not shown) defining the brightness of a finger portion and of a background portion in the captured image data of the fingerprint camera 202, or when the fingerprint camera 202 includes an illuminance sensor (not shown), is determined using an output value of the illuminance sensor.

Next, the "dynamic user condition" defines the following items: "imaging distance and focus", "finger skin surface condition", and "number of fingers used". When a person to be authenticated is about to subject to the fingerprint authentication, maintaining a correct imaging distance of the fingerprint camera 202 or focusing properly are necessary conditions for improving the accuracy of the fingerprint authentication. Therefore, whether the fingerprint authentication is preferentially executed based on the "imaging distance and focus" of the user information ("dynamic user condition") is preferably determined at the time of executing the modal biometric authentication based on the captured image data of the fingerprint camera 202. When the fingerprint authentication is executed using the captured image data of the fingerprint camera 202, it is preferable to use not only the score but also fingerprint image quality condition (for example, the size of the finger portion, resolution, and a focus level) to determine whether the fingerprint authentication is necessary from the next time onwards.

When a person to be authenticated is about to subject to the fingerprint authentication, if the finger skin surface condition (for example, a degree of wetness, the presence or absence of dirt, and the presence or absence of scratches) of the person to be authenticated is not good, the accuracy of the fingerprint authentication is degraded. The degree of wetness indicates whether the finger is dry or wet. Therefore, whether the fingerprint authentication is preferentially executed based on the "finger skin surface condition" of the user information ("dynamic user condition") is preferably determined at the time of executing the modal biometric authentication based on the captured image data of the fingerprint camera 202. When the fingerprint authentication is executed using the captured image data of the fingerprint camera 202, it is preferable to use not only the score but also the fingerprint image quality conditions such as the degree of wetness, the presence or absence of dirt and scratches to determine whether the fingerprint authentication is necessary from the next time onwards.

It is known that when a person to be authenticated is about to subject to the fingerprint authentication, there are algorithms for fingerprint authentication using a single finger and algorithms for fingerprint authentication using multiple fingers. Therefore, whether the fingerprint authentication is preferentially executed based on the "number of fingers used" of the user information ("dynamic user condition") is preferably determined at the time of executing the modal biometric authentication based on the captured image data of the fingerprint camera 202, or at the time of executing the modal biometric authentication (in particular, when referring to the user information database 30) based on the captured image data of the fingerprint camera 202. When the fingerprint authentication is executed using the captured image data of the fingerprint camera 202, it is preferable to use one finger or multiple fingers for the determination depending on an algorithm used.

In a state where a person to be authenticated does not look in the direction of any one of the face camera 201, the fingerprint camera 202, and the microphone 203, or in a case where the sensor group 20 is installed at a relatively low position as viewed from a person to be authenticated, the multimodal authentication device 10 may preferentially guide the fingerprint authentication based on the characteristics of the fingerprint camera 202, which only requires capturing an image of the finger of the person to be authenticated. In this case, for example, use cases include, but are not limited to, authentication of a driver, check-in, check-out, entry, exit management of a hotel, locker locking, and ATM usage.

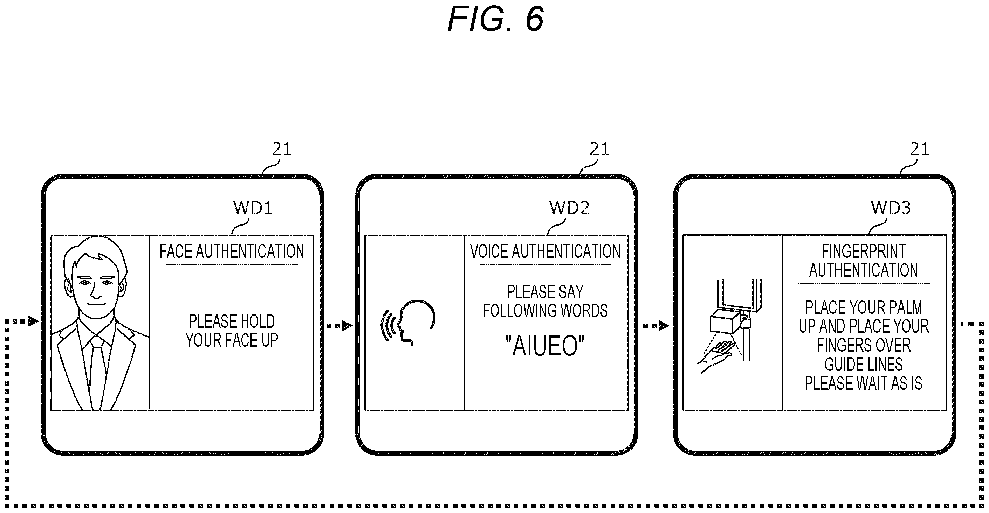

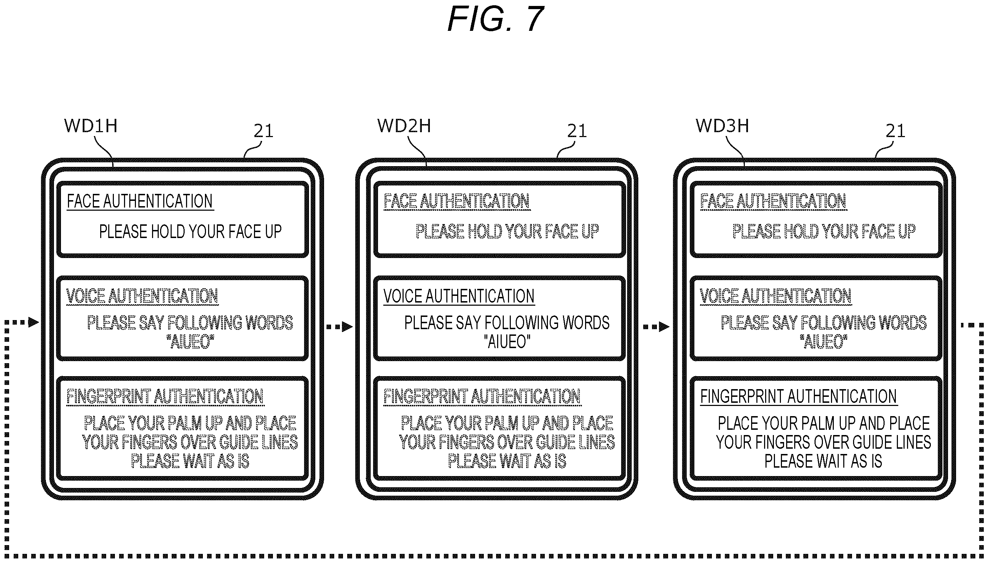

Fig. 6 is a diagram showing a first display example of a guide method for the modal biometric authentication that transitions in time series. Fig. 7 is a diagram showing a second display example of the guide method for the modal biometric authentication that transitions in time series. The guide method determination unit 55 (see Fig. 2) determines a guide method for presenting an execution order for preferentially executing a plurality of types of biometric authentication on a person to be authenticated based on contents (an example of the ambient environment information) set in each of the system condition setting unit 51, the environment condition setting unit 52, the usage condition setting unit 53, and the user selection setting unit 54. The guide display unit 56 outputs and displays on the display 21 the guide method determined by the guide method determination unit 55.

In the first display example of the guide method, as an order of priority for execution on a person to be authenticated, for example, as shown in Fig. 6, guide is performed in the following order: guide screen WD1 specialized for face authentication → guide screen WD2 specialized for voice authentication → guide screen WD3 specialized for fingerprint authentication. The screen transition (switching) between the guide screens WD1, WD2, and WD3 is performed by the guide display unit 56 when a predetermined switching condition is satisfied as described later. The execution order is not limited to the example of Fig. 6, and is only an example.

The guide screen WD1 for face authentication displays, for example, a part of whole-body image showing the face of a person, the name of the modal biometric authentication (specifically, the words "face authentication"), and a message to the person to be authenticated saying "Please hold your face up". Note that the message to the person to be authenticated is not limited to "Please hold your face up". As a message to the person to be authenticated about to subject to the face authentication, it is sufficient to include a statement instructing the person to position the face toward the face camera 201 so that it is imaged, and the same applies below.

The guide screen WD2 for voice authentication displays, for example, an image showing a person making a sound from his or her mouth, the name of the modal biometric authentication (specifically, the words "voice authentication"), and a message to the person to be authenticated saying "Please say following words: "AIUEO"". It should be noted that the phrase that the person to be authenticated is to say does not have to be limited to "AIUEO", and the same applies below.

The guide screen WD3 for fingerprint authentication displays, for example, an illustration image of the fingerprint camera 202 capturing an image of a finger of a person, the name of the modal biometric authentication (specifically, the words "fingerprint authentication"), and a message to the person to be authenticated saying "Place your palm up and place your fingers over guide lines, and please wait as is". The messages to the person to be authenticated are not limited to those described above, and the same applies below.

In the second display example of the guide method, as the order of priority for execution on a person to be authenticated, for example, as shown in Fig. 7, guide is performed in the following order: guide screen WD1H in which only a face authentication part is highlighted and the other two modal biometric authentication parts among the three types of modal biometric authentication (face authentication, voice authentication, fingerprint authentication) are grayed out → guide screen WD2H in which only a voice authentication part is highlighted and the other two modal biometric authentication parts among the same three types of modal biometric authentication are grayed out → guide screen WD3H in which only a fingerprint authentication part is highlighted and the other two modal biometric authentication parts among the same three types of modal biometric authentication are grayed out. The screen transition (switching) between the guide screens WD1H, WD2H, and WD3H is performed by the guide display unit 56 when a predetermined switching condition is satisfied as described later. The execution order is not limited to the example of Fig. 7, and is only an example.

In the guide screen WD1H, for example, the name of the modal biometric authentication (specifically, the words "face authentication") and the message to the person to be authenticated saying "Please hold your face up" are highlighted, and the names of modal biometric authentication and a message part to a person to be authenticated corresponding to each of the voice authentication and the fingerprint authentication are grayed out.

In the guide screen WD2, for example, the name of the modal biometric authentication (specifically, the words "voice authentication") and the message to the person to be authenticated saying "Please say following words: "AIUEO"" are highlighted, and the names of modal biometric authentication and a message part to a person to be authenticated corresponding to each of the face authentication and the fingerprint authentication are grayed out.

In the guide screen WD3, for example, the name of the modal biometric authentication (specifically, the words "fingerprint authentication") and the message to the person to be authenticated saying "Place your palm up and place your fingers over guide lines, and please wait as is" are highlighted, and the names of modal biometric authentication and a message part to a person to be authenticated corresponding to each of the face authentication and the voice authentication are grayed out.

Fig. 8 is a diagram showing an example of a display screen indicating an authentication success. Fig. 9 is a diagram showing an example of a display screen indicating an authentication failure. The guide display unit 56 outputs and displays on the display 21 a screen (see Fig. 8 or Fig. 9) indicating a result of the biometric authentication determined by the overall control unit 50 based on a processing result of each of the modal biometric authentication units 601 to 60n.

The authentication success screen WD4 of Fig. 8 displays the fact that the biometric authentication is successful by the determination of the overall control unit 50 based on the processing result of each of the modal biometric authentication units 601 to 60n (for example, a message saying "OK"), the name of the person to be authenticated identified by referring to the user information database 30 (for example, "A Maru B Taro"), and the type MD1 of the modal biometric authentication actually used. Here, as the type MD1 of the modal biometric authentication actually used is exemplified by two types, face authentication and fingerprint authentication, which are highlighted, but the present disclosure is not limited thereto. It should be noted that the voice authentication that is grayed out indicates that it is not in use.

On the other hand, the authentication failure screen WD5 of Fig. 9 displays the fact that the biometric authentication is failed by the determination of the overall control unit 50 based on the processing result of each of the modal biometric authentication units 601 to 60n (for example, a message saying "NG"), a message indicating that the name of the person to be authenticated is not identified by referring to the user information database 30 (for example, "we were unable to verify your identity"), and the type MD1 of the modal biometric authentication actually used. Here, as the type MD1 of the modal biometric authentication actually used is exemplified by two types, face authentication and fingerprint authentication, which are highlighted, but the present disclosure is not limited thereto. It should be noted that the voice authentication that is grayed out indicates that it is not in use.

### <System Operation Procedure>

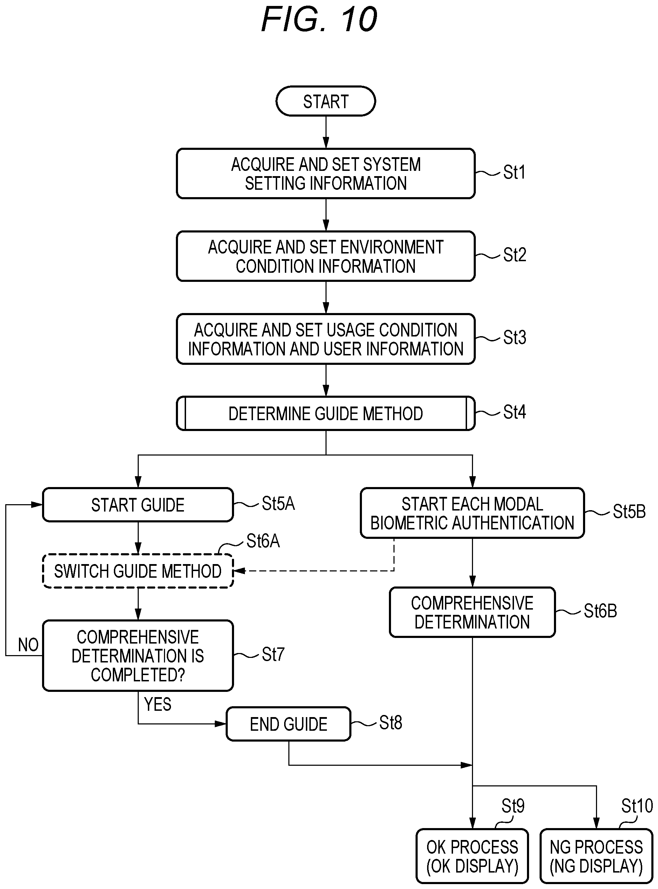

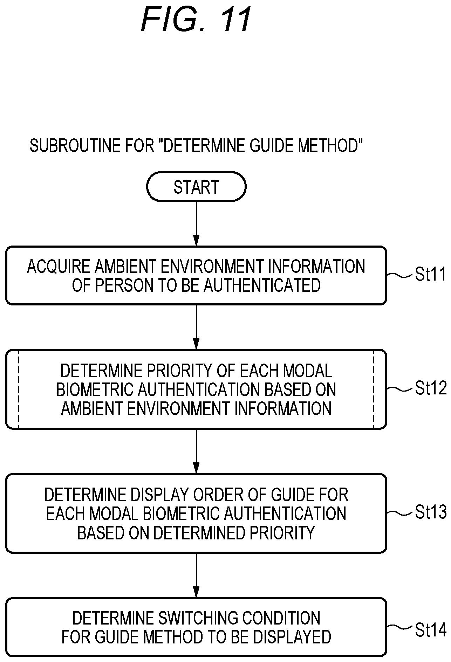

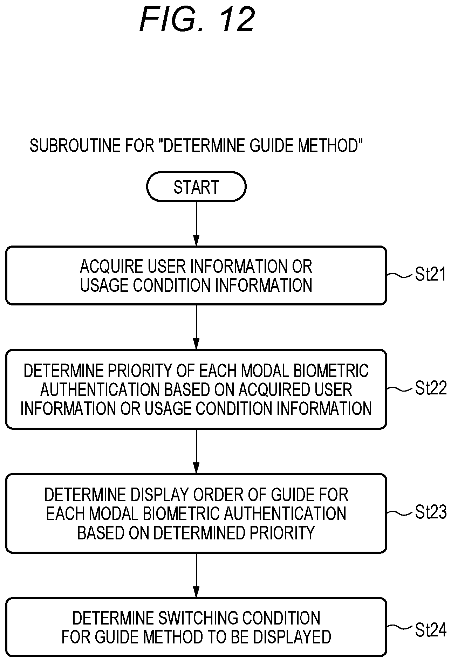

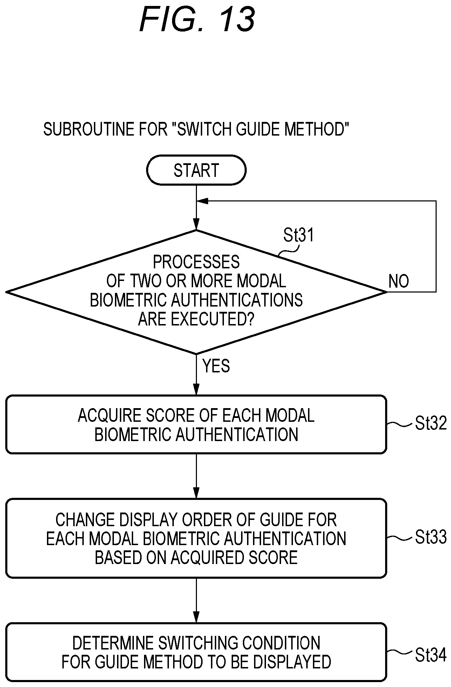

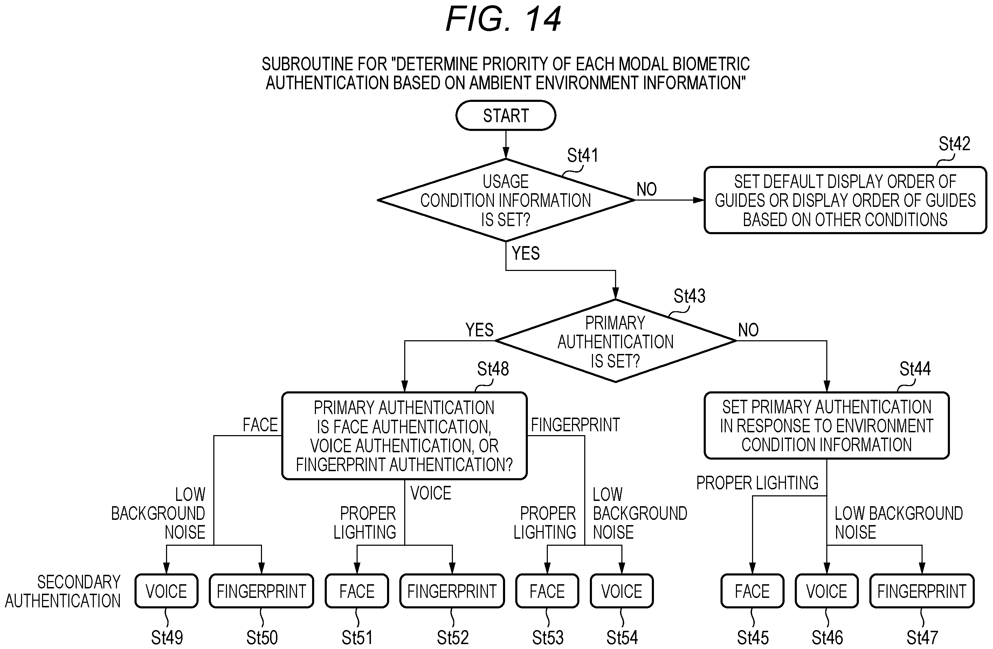

Next, an operation procedure example of the multimodal authentication device according to the present embodiment will be described with reference to Figs. 10 to 14. Fig. 10 is a flowchart showing an example of an overall operation procedure of the multimodal authentication device 10. Fig. 11 is a flowchart showing an example of an operation procedure of a first subroutine for determining the guide method. Fig. 12 is a flowchart showing an example of an operation procedure of a second subroutine for determining the guide method. Fig. 13 is a flowchart showing an example of an operation procedure of a subroutine for switching the guide method. Fig. 14 is a flowchart showing an example of an operation procedure of a subroutine for determining the priority of the modal biometric authentication. Each process (step) in Figs. 10 to 14 is mainly executed by the processor 22 (see Fig. 2) of the multimodal authentication device 10.

In Fig. 10, the processor 22 acquires the system condition information of the biometric authentication system 1 and temporarily sets the system condition information in the memory 23 or the like when the biometric authentication system 1 is initially installed or activated (step St1). The processor 22 acquires the environment condition information (for example, brightness, sound pressure of a noise signal) indicating the environment surrounding a person to be authenticated directly from the output of the sensor group 20 at the time of acquiring the biometric information of the person to be authenticated or periodically, or calculates the environment condition information based on the output, and temporarily sets the information in the memory 23 or the like (step St2). The processor 22 acquires the usage condition information (for example, information indicating cash withdrawal, bank balance inquiry, or cash deposit) input by the person to be authenticated through an operation on the input device 25, and temporarily sets the usage condition information in the memory 23 or the like (step St3). Further, the processor 22 acquires the user information (for example, user ID) input by the person to be authenticated through an operation on the input device 25, and temporarily sets the user information in the memory 23 or the like (step St3).

The processor 22 determines the guide method for presenting the execution order for preferentially executing a plurality of types of modal biometric authentication on a person to be authenticated based on the various types of information set in each of step St1 to step St3 (step St4). A detailed example of the operation procedure of step St4 will be described later with reference to Figs. 11 and 12.

The processor 22 outputs and displays the guide method (for example, the priority and display order of each modal biometric authentication) determined in step St4 on the display 21, thereby starting guide as to which modal biometric authentication should be preferentially executed on the person to be authenticated (step St5A). In addition, in parallel with step St5A, the processor 22 executes a process for each modal biometric authentication according to the guide method determined in step St4 on the person to be authenticated (step St5B). The processor 22 uses the processing result of each modal biometric authentication executed in step St5B to determine (comprehensive determination) whether the person to be authenticated is a person registered in advance in the user information database 30 (step St6B).

After the guide is started in step St5A, for example, when the processor 22 determines that a predetermined switching condition is satisfied based on the processing results of the modal biometric authentication executed in step St5B, the processor 22 switches the guide method (that is, in which execution order the modal biometric authentication is preferentially performed on the person to be authenticated at the current time) and outputs the guide method to the display 21 for display (step St6A). Step St6A is not executed unless the predetermined switching condition is satisfied, and the display of the current guide method content is maintained. The processor 22 determines whether the comprehensive determination (see step St6B) is completed (step St7). When it is determined that the comprehensive determination (see step St6B) is not completed (step St7, NO), the processor 22 executes the process of step St5A.

When it is determined that the comprehensive determination (step St6B) is completed (step St7, YES), the processor 22 ends the display of the guide method determined in step St4 or the guide method switched in step St6A on the display 21 (step St8). When the display of the guide method ends, the processor 22 generates a screen (see Fig. 8 or Fig. 9) indicating the authentication result for the person to be authenticated determined in step St6B, and outputs the screen to the display 21 for display.

Specifically, when it is determined that the person to be authenticated matches a person registered in the user information database 30 (that is, the person to be authenticated is the person in question), the processor 22 displays the authentication success screen WD4 shown in Fig. 8 on the display 21 (step St9). On the other hand, when it is determined that the person to be authenticated does not match a person registered in the user information database 30 (that is, the person to be authenticated is not the person in question), the processor 22 displays the authentication failure screen WD5 shown in Fig. 9 on the display 21 (step St10). Thus, the overall operation procedure of the multimodal authentication device 10 ends.

Here, the first subroutine that illustrates the process of determining the guide method in step St4 in detail will be described with reference to Fig. 11.

In Fig. 11, the processor 22 acquires the ambient environment information of the person to be authenticated (for example, information on sound pressure of a noise signal around the person to be authenticated, surrounding brightness, current time, or the installation place of the multimodal authentication device 10) by referring to the memory 23 or the like (step St11). The processor 22 determines the priority of each modal biometric authentication based on the ambient environment information acquired in step St11 (step St12). Details of step St12 will be described later with reference to Fig. 14. For example, the face authentication may be prioritized in a bright environment, and the voice authentication may be prioritized in a dark environment. In addition, the voice authentication may be given lower priority if the surroundings are noisy, and the priority of the face authentication may be increased in an installation place where a processing speed of the modal biometric authentication is required. Based on the priority of each modal biometric authentication determined in step St12, the processor 22 determines a display order of the guides for each modal biometric authentication (for example, as shown in Fig. 6, each modal biometric authentication is displayed in descending order of priority, or as shown in Fig. 7, all the guides are displayed, but a guide with high priority is highlighted, while a guide with low priority is grayed out) (step St13).

The processor 22 determines and sets a switching condition for switching (changing) the guide for the modal biometric authentication being displayed as one that should be preferentially executed (for example, any one of the guide screens WD1, WD2, and WD3 for a single modal biometric authentication in Fig. 6, or any one of the guide screens WD1H, WD2H, and WD3H for the modal biometric authentication being highlighted in Fig. 7) to a guide for another modal biometric authentication (step St14). The switching condition includes, for example, the display of the guide for a currently displayed modal biometric authentication is maintained until the biometric information of the person to be authenticated is acquired, or the guide for the modal biometric authentication having a low priority at the time of initial determination is switched to the guide for a next modal biometric authentication after a certain period of time has elapsed, regardless of whether the biometric information of the person to be authenticated is acquired. Needless to say, the switching condition is not limited thereto.

Here, the second subroutine that illustrates the process of determining the guide method in step St4 in detail will be described with reference to Fig. 12.

In Fig. 12, the processor 22 acquires the user information (for example, the user ID serving as an identification number of the person to be authenticated) or the usage condition information (for example, services the person to be authenticated wants to use, such as cash transfers, cash deposits, and bank balance inquiry) of the person to be authenticated by referring to the memory 23 or the like (step St21). The processor 22 determines the priority of each modal biometric authentication based on the user information or the usage condition information acquired in step St21 (step St22). For example, when the usage condition information is cash transfer, it is determined that the fingerprint authentication of the person to be authenticated is mandatory, and it is determined that the other modal biometric authentication (face authentication and voice authentication) are not necessarily mandatory. Based on the priority of each modal biometric authentication determined in step St22, the processor 22 determines a display order of the guides for each modal biometric authentication (for example, as shown in Fig. 6, each modal biometric authentication is displayed in descending order of priority, or as shown in Fig. 7, all the guides are displayed, but a guide with high priority is highlighted, while a guide with low priority is grayed out) (step St23). In step St23, the processor 22 may determine that the modal biometric authentication determined to be mandatory in step St22 is to be displayed at the beginning of the guide method.

The processor 22 determines and sets a switching condition for switching (changing) the guide for the modal biometric authentication being displayed as one that should be preferentially executed (for example, any one of the guide screens WD1, WD2, and WD3 for a single modal biometric authentication in Fig. 6, or any one of the guide screens WD1H, WD2H, and WD3H for the modal biometric authentication being highlighted in Fig. 7) to a guide for another modal biometric authentication (step St24). The switching condition includes, for example, a guide for modal biometric authentication determined to be mandatory is kept displayed until the biometric information of the corresponding person to be authenticated is acquired. Needless to say, the switching condition is not limited thereto.

Here, a subroutine that illustrates the process of switching the guide method in step St6A in detail will be described with reference to Fig. 13.

In Fig. 13, the processor 22 refers to the memory 23 or the like to determine whether a corresponding modal biometric authentication process is executed by each of two or more modal biometric authentication units (step St31). When it is determined that the corresponding modal biometric authentication process is not executed by each of the two or more modal biometric authentication units (step St31, NO), the processor 22 repeats the process of step St31 until it is determined that the corresponding modal biometric authentication process is executed by each of the two or more modal biometric authentication units.

When it is determined that the corresponding modal biometric authentication process is executed by each of the two or more modal biometric authentication units (step St31, YES), the processor 22 acquires the score of each modal biometric authentication (step St32). Based on the score of each modal biometric authentication acquired in step St32, the processor 22 determines a display order of guide for each modal biometric authentication (for example, a display is displayed to prompt acquisition of biometric information corresponding to the modal biometric authentication again when the score is lower than a predetermined NG threshold, or display a guide for another modal biometric authentication when the score is higher than a predetermined OK threshold) (step St33).

The processor 22 determines and sets a switching condition for switching (changing) the guide for the modal biometric authentication being displayed as one that should be preferentially executed (for example, any one of the guide screens WD1, WD2, and WD3 for a single modal biometric authentication in Fig. 6, or any one of the guide screens WD1H, WD2H, and WD3H for the modal biometric authentication being highlighted in Fig. 7) to a guide for another modal biometric authentication (step St34). The switching condition includes, for example, a guide for modal biometric authentication determined to be mandatory is kept displayed until the biometric information of the corresponding person to be authenticated is acquired. Needless to say, the switching condition is not limited thereto.

Here, the determination on priority of each modal biometric authentication based on the ambient environment information in step St12 will be described in detail with reference to Fig. 14. The determination on priority of each modal biometric authentication based on the ambient environment information in step St12 is not limited to the content shown in Fig. 14.

In Fig. 14, the processor 22 determines whether the usage condition information is set in the memory 23 or the like (step St41). When it is determined that the usage condition information is not set (step St41, NO), the processor 22 sets a default display order of guides or modal biometric authentication defined in advance or a display order of guides determined based on other conditions (for example, system condition information, environment condition information, and user information) (step St42). After step St42, the process of Fig. 14 ends.

On the other hand, when it is determined that the usage condition information is set (step St41, YES), the processor 22 determines whether a primary (that is, first guided) modal biometric authentication guide is set by referring to the memory 23 or the like (step St43).

When it is determined that the guide for the primary modal biometric authentication is not set (step St43, NO), the processor 22 determines to set the guide for the primary modal biometric authentication in response to the environment condition information, for example (step St44). For example, when the brightness around the person to be authenticated is a value within an appropriate range (for example, from the darkness threshold (refer to the above) to the brightness threshold (refer to the above)) stored in the memory 23 or the like, the processor 22 determines to use the guide for the face authentication as the guide for the primary modal biometric authentication (step St45). For example, when the sound pressure (background noise) of a noise signal around the person to be authenticated is less than a predetermined sound pressure threshold stored in the memory 23 or the like, the processor 22 determines to use the guide for the voice authentication as the guide for the primary modal biometric authentication (step St46). For example, when the brightness around the person to be authenticated is not a value within a predetermined range indicating the appropriate range and the sound pressure (background noise) of the noise signal around the person to be authenticated is greater than a predetermined sound pressure threshold, the processor 22 determines to use the guide for the fingerprint authentication as the guide for the primary modal biometric authentication (step St47).

On the other hand, when it is determined that the guide for the primary modal biometric authentication is set (step St43, YES), the processor 22 determines whether the primary modal biometric authentication is face authentication, voice authentication, or fingerprint authentication (step St48).

In a case where it is determined that the primary modal biometric authentication is the face authentication (step St48, face), if the sound pressure (background noise) of the noise signal around the person to be authenticated is less than a predetermined sound pressure threshold stored in the memory 23 or the like, the processor 22 determines to use the guide for the voice authentication as the guide for a secondary (that is, second after primary) modal biometric authentication (step St49). In a case where it is determined that the primary modal biometric authentication is the face authentication (step St48, face), if the sound pressure (background noise) of the noise signal around the person to be authenticated is greater than a predetermined sound pressure threshold stored in the memory 23 or the like, the processor 22 determines to use the guide for the fingerprint authentication as the guide for a secondary (that is, second after primary) modal biometric authentication (step St50).

In a case where it is determined that the primary modal biometric authentication is the voice authentication (step St48, voice), if the brightness around the person to be authenticated is a value within the appropriate range (for example, from the darkness threshold (refer to the above) to the brightness threshold (refer to the above)) stored in the memory 23 or the like, the processor 22 determines to use the guide for the face authentication as the guide for the secondary (that is, second after primary) modal biometric authentication (step St51). In a case where it is determined that the primary modal biometric authentication is the voice authentication (step St48, voice), if the brightness around the person to be authenticated is not a value within the appropriate range (for example, from the darkness threshold (refer to the above) to the brightness threshold (refer to the above)) stored in the memory 23 or the like, the processor 22 determines to use the guide for the fingerprint authentication as the guide for the secondary (that is, second after primary) modal biometric authentication (step St52).

In a case where it is determined that the primary modal biometric authentication is the fingerprint authentication (step St48, fingerprint), if the brightness around the person to be authenticated is a value within the appropriate range (for example, from the darkness threshold (refer to the above) to the brightness threshold (refer to the above)) stored in the memory 23 or the like, the processor 22 determines to use the guide for the face authentication as the guide for the secondary (that is, second after primary) modal biometric authentication (step St53). In a case where it is determined that the primary modal biometric authentication is the fingerprint authentication (step St48, fingerprint), if the sound pressure (background noise) of the noise signal around the person to be authenticated is less than a predetermined sound pressure threshold stored in the memory 23 or the like, the processor 22 determines to use the guide for the voice authentication as the guide for a secondary (that is, second after primary) modal biometric authentication (step St54).

As described above, an authentication guide device (for example, the multimodal authentication device 10) according to the present embodiment includes: one or more acquisition units (for example, the system condition setting unit 51, the environment condition setting unit 52, and the usage condition setting unit 53) configured to acquire ambient condition information at the time of acquiring one or more pieces of biometric information of a person (for example, a person to be authenticated) to be used for a plurality of types of biometric authentication (modal biometric authentication); a guide determination unit (for example, the guide method determination unit 55) configured to determine, based on the ambient condition information, a guide method for presenting an execution order for preferentially executing the plurality of types of biometric authentication on the person; and the guide display unit 56 configured to display the guide method on a display unit (for example, the display 21). Accordingly, the multimodal authentication device 10 can adaptively present to the user an effective authentication guide appropriate to the ambient condition information according to the use situation (for example, the ambient condition information of a person to be authenticated) of authentication (for example, the modal biometric authentication), and can support efficient authentication.

The ambient condition information includes system condition information related to installation of the authentication guide device (for example, the multimodal authentication device 10), environment condition information around the person (for example, a person to be authenticated), and usage condition information of the biometric authentication. The guide determination unit (for example, the guide method determination unit 55) determines the guide method based on at least one of the system condition information, the environment condition information, and the usage condition information. Accordingly, the multimodal authentication device 10 can present the person to be authenticated with execution of modal biometric authentication that is adapted to the use situation around the person to be authenticated according to at least one of the system condition information that is set in advance and hardly changes, the environment condition information that is easily changed each time measurement is performed by the sensor group 20, and the usage condition information whose purpose is likely to differ for each person to be authenticated.

The ambient condition information further includes user information having a preference or characteristics of the person. Accordingly, the multimodal authentication device 10 can present the person to be authenticated with execution of modal biometric authentication that is adapted to the person to be authenticated according to the user information having different personal preferences or characteristics for each person to be authenticated.

The guide determination unit (for example, the guide method determination unit 55) determines the guide method based on at least two of system condition information related to installation of the authentication guide device (for example, the multimodal authentication device 10), environment condition information around the person (for example, a person to be authenticated), usage condition information of the biometric authentication, and user information having a preference or a characteristic of the person. Accordingly, the multimodal authentication device 10 can present the person to be authenticated with execution of modal biometric authentication that is adapted to the use situation that combines at least two of the system condition information that is set in advance and hardly changes, the environment condition information that is easily changed each time measurement is performed by the sensor group 20, the usage condition information whose purpose is likely to differ for each person to be authenticated, and the user information having different personal preferences or characteristics for each person to be authenticated.

The environment condition information has a characteristic that changes over time, and is a measurement value of an environmental parameter around the authentication guide device (for example, the multimodal authentication device 10). Accordingly, the multimodal authentication device 10 can appropriately guide the person to be authenticated to execute the biometric authentication smoothly and with less burden by taking into account the environment condition information that is likely to change each time the biometric information of the person to be authenticated is acquired in order to undergo biometric authentication.

The system condition information has a characteristic that does not change over time, and is fixed equipment condition information that is determined when the authentication guide device (for example, the multimodal authentication device 10) is installed. Accordingly, the multimodal authentication device 10 can appropriately guide the person to be authenticated to execute the biometric authentication smoothly and with less burden by taking into account the fixed equipment condition information (for example, the positions or performances of the face camera 201 and the fingerprint camera 202, and the position or performance of the microphone 203) determined when the multimodal authentication device 10 is installed.

The usage condition information is information indicating a usage of biometric authentication by the authentication guide device (for example, the multimodal authentication device 10). Accordingly, the multimodal authentication device 10 can appropriately guide the person to be authenticated to execute the biometric authentication smoothly and with less burden by taking into account the use for which the person to be authenticated undergoes the authentication.

The plurality of types of biometric authentication include at least two of face authentication, fingerprint authentication, and voice authentication of the person (for example, a person to be authenticated). The biometric information is, for the face authentication, a face image of the person or a feature based on the face image, for the fingerprint authentication, a fingerprint image of the person or a feature based on the fingerprint image, and for the voice authentication, a voice of the person or a feature based on the voice. Accordingly, the multimodal authentication device 10 can perform comprehensive authentication using at least two of the face, fingerprint, and voice of the person to be authenticated, making it less susceptible to damage caused by spoofing by others.

The guide determination unit (for example, the guide method determination unit 55) determines a switching condition for switching the execution order in the guide method. When the switching condition is satisfied, the guide display unit 56 switches the execution order in the guide method being displayed on the display unit (for example, the display 21) when the switching condition is satisfied, and displays the execution order on the display unit. Accordingly, the multimodal authentication device 10 does not always display the same modal biometric authentication, but can present the person to be authenticated with execution of the modal biometric authentication to be performed next each time the switching condition is satisfied.

The authentication guide device (for example, the multimodal authentication device 10) further includes one or more authentication units (for example, the modal biometric authentication units 601 to 60n) that execute at least one biometric authentication of the plurality of types of biometric authentication during display of the guide method on the display unit (for example, the display 21). Accordingly, the multimodal authentication device 10 can acquire the biometric information of the person to be authenticated and execute the modal biometric authentication in parallel while presenting a guide of the execution order of the modal biometric authentication according to the use situation around the person to be authenticated.

The guide determination unit (for example, the guide method determination unit 55) changes the execution order based on a score of the biometric authentication. Accordingly, the multimodal authentication device 10 can present the person to be authenticated with a real-time guide for modal biometric authentication to be preferentially executed based on the score of modal biometric authentication actually performed.

The guide display unit 56 displays a final result of the plurality of types of biometric authentication of the person (for example, a person to be authenticated) on the display unit (for example, the display 21) together with names of the plurality of types of biometric authentication. Accordingly, the multimodal authentication device 10 can visually present the final result of the modal biometric authentication (that is, whether the authentication is successful or failed) to the person to be authenticated, allowing appropriate feedback to be given to the person to be authenticated.

Although the embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, constituent elements in the embodiment described above may be freely combined without departing from the gist of the invention.

The present application is based on Japanese Patent Application No. 2022-094623 filed on June 10, 2022, and the contents thereof are incorporated herein by reference.

### INDUSTRIAL APPLICABILITY

The present disclosure is useful as an authentication guide device and an authentication guide method for adaptively presenting an effective authentication guide to a user according to a use situation of authentication, thereby supporting efficiency of the authentication.

### REFERENCE SIGNS LIST

1: biometric authentication system
10: multimodal authentication device
20: sensor group
21: display
22: processor
23: memory
24: communication IF
25: input device
30: user information database
40: drive device
50: overall control unit
51: system condition setting unit
52: environment condition setting unit
53: usage condition setting unit
54: user selection setting unit
55: guide method determination unit
56: guide display unit
201: face camera
202: fingerprint camera
203: microphone
601, 60n: modal processing unit
611, 61n: environment condition determination unit
621, 62n: score calculation unit

## Claims

1. An authentication guide device comprising:
one or more acquisition units configured to acquire ambient condition information at a time of acquisition of one or more pieces of biometric information of a person to be used for a plurality of types of biometric authentication;
a guide determination unit configured to determine, based on the ambient condition information, a guide method for presenting an execution order for preferentially executing the plurality of types of biometric authentication on the person; and
a guide display unit configured to display the guide method on a display unit.

2. The authentication guide device according to claim 1,
wherein the ambient condition information includes system condition information related to installation of the authentication guide device, environment condition information around the person, and usage condition information of the biometric authentication, and
wherein the guide determination unit is configured to determine the guide method based on at least one of the system condition information, the environment condition information, and the usage condition information.

3. The authentication guide device according to claim 2,
wherein the ambient condition information further includes user information having a preference or a characteristic of the person.

4. The authentication guide device according to claim 1,
wherein the guide determination unit is configured to determine the guide method based on at least two of system condition information related to installation of the authentication guide device, environment condition information around the person, usage condition information of the biometric authentication, and user information having a preference or a characteristic of the person.

5. The authentication guide device according to claim 2,
wherein the environment condition information has a characteristic that changes over time, and is a measurement value of an environmental parameter around the authentication guide device.

6. The authentication guide device according to claim 2,
wherein the system condition information has a characteristic that does not change over time, and is fixed equipment condition information that is determined when the authentication guide device is installed.

7. The authentication guide device according to claim 2,
wherein the usage condition information is information indicating a usage of biometric authentication by the authentication guide device.

8. The authentication guide device according to claim 1,
wherein the plurality of types of biometric authentication include at least two of face authentication, fingerprint authentication, or voice authentication of the person, and
wherein the biometric information is, for the face authentication, a face image of the person or a feature based on the face image, for the fingerprint authentication, a fingerprint image of the person or a feature based on the fingerprint image, and for the voice authentication, a voice of the person or a feature based on the voice.

9. The authentication guide device according to claim 1,
wherein the guide determination unit is configured to determine a switching condition for switching the execution order in the guide method, and
wherein the guide display unit is configured to, when the switching condition is satisfied, switch the execution order in the guide method being displayed on the display unit when the switching condition is satisfied and display the execution order on the display unit.

10. The authentication guide device according to claim 1, further comprising:
one or more authentication units configured to execute at least one biometric authentication of the plurality of types of biometric authentication during display of the guide method on the display unit.

11. The authentication guide device according to claim 10,
wherein the guide determination unit is configured to change the execution order based on a score of the biometric authentication.

12. The authentication guide device according to claim 10,
wherein the guide display unit is configured to display a final result of the plurality of types of biometric authentication of the person on the display unit together with names of the plurality of types of biometric authentication.

13. An authentication guide method executed by an authentication guide device, the authentication guide method comprising:
a step of acquiring ambient condition information at a time of acquisition of one or more pieces of biometric information of a person to be used for a plurality of types of biometric authentication;
a step of determining, based on the ambient condition information, a guide method for presenting an execution order for preferentially executing the plurality of types of biometric authentication on a person; and
a step of displaying the guide method on a display unit.
